# EUROPEAN PATENT SPECIFICATION

(11) **EP 1 832 905 B1**
(45) Date of publication and mention of the grant of the patent: **14.05.2008**
(21) Application number: 06290395.0
(22) Date of filing: 07.03.2006
(51) Int. Cl.: G02B 6/38

(54) **Protected panel connection interface**
Geschützte Tafelverbindungsschnittstelle
Interface de connexion de panneau protégée

(43) Date of publication of application: 12.09.2007
(73) Proprietor: Alcatel Lucent, 75008 Paris (FR)
(72) Inventor: Kammer, Michael, 31542 Bad Nenndorf (DE); Brunsch, Dietmar, 30519 Hannover (DE)
(74) Representative: Korakis-Ménager, Sophie

(56) References cited:
- US-A- 5 155 795
- US-A1- 2004 062 486
- US-B1- 6 445 867

## Description

The present invention relates generally to product protection and more particularly to protection of panel connection interfaces.

Panel connection interfaces are known as a means to establish an electric or optical transmission connection between two electric or optical transmission elements located at either side of a panel or wall. An example of such panel connection interface, which is considered the closest state of the art, is disclosed in patent application US 2005/0281510 A1, in which a fiber optic cable with a plug assembly is engaged to a receptacle provided in a wall.

Patent application publication US2004/0062486 also shows an optical connector mounted in a perforation in a wall, and a plug assembly adapted for coupling with said connector.

A problem with such type of connection interfaces, particularly in outdoor environments, is that they are sensible to environmental or application environment effects such as splashing or spray of water and dust. When panel connection interfaces are not protected against such effects the performance and proper function of the electric or optical connection may deteriorate with time.

It is the object of the present invention to provide protection for panel connection interfaces placed in application environments with the presence of dust and water.

The object is achieved by a method for protecting a connection interface in a panel or wall according to claim 1 and a protected panel connection interface according to claim 4.

Further advantageous configurations of the invention emerge from the dependent claims, the following description and the drawings.

An embodiment example of the invention is now explained with the aid of Figures 1 to 7.
Figure 1 shows a conventional panel connection interface.
Figure 2 shows a panel or wall with a perforation provided according to the invention.
Figure 3 shows a perspective view of a panel mounting adapter fixed to a panel or wall according to the invention.
Figure 4 shows a panel mounting adapter and a protective plate fixed to a panel or wall according to the invention.
Figure 5 shows a protective external housing of a cable plug assembly according to the invention.
Figure 6 shows a protected panel connection interface according to a first embodiment of the invention
Figure 7 shows a protected panel connection interface according to a second embodiment of the invention.

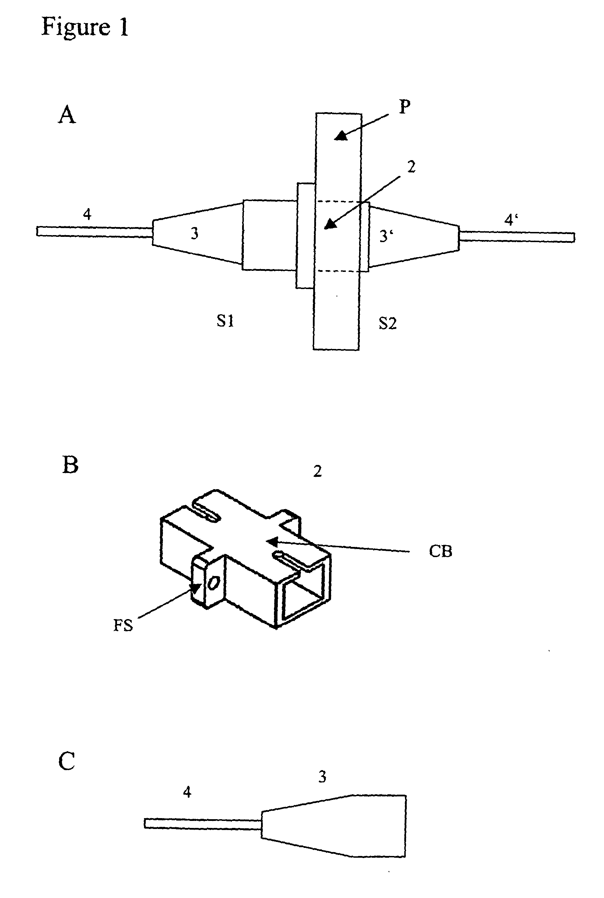

Figure 1A shows a panel P, panel sides S1 and S2, a panel mounting adapter 2, optical or electrical transmission cables 4, 4', and transmission cable plug assemblies 3, 3'.

It shows a top or side view of a conventional panel connection interface in which the panel mounting adapter 2 is fixed to the panel P for reception of plug assemblies 3, 3' of optical or electrical transmission cables 4, 4' on either side S1, S2 of the panel P. The optical-to-optical or electrical-to-electrical interface connection may be disconnected and reconnected at any time just by introducing or removing the plug assemblies from the panel mounting adapter 2.

Figure 1B shows a perspective view of a conventional panel mounting adapter 2 or receptacle which comprises at least a fixing sleeve FS and a coupling body CB.

Figure 1C shows a top or side view of a conventional optical or electrical transmission cable 4 having a plug assembly 3. For optical transmission, the plug assembly 3 comprises an optical fiber alignment mechanism, e.g. a ferrule, and for electrical transmission it comprises an electrical alignment mechanism e.g. a male electrical connector.

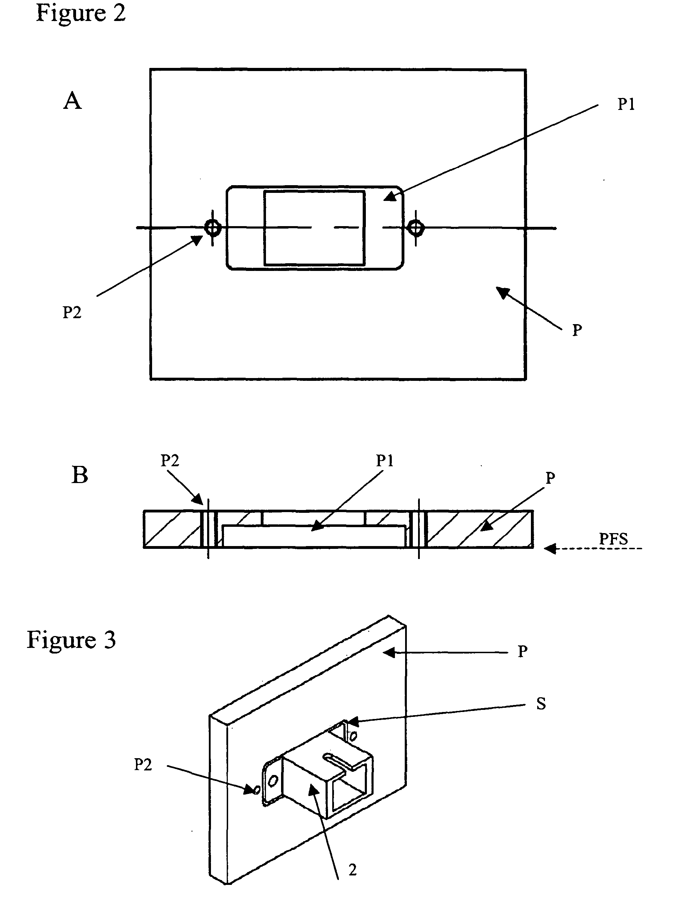

Figure 2 shows a panel or wall P, a first perforation P1 and at least one second perforation P2.

It shows a front view of the panel P in which the first perforation P1 is provided for receiving a panel mounting adapter (not shown) e. g. of the kind shown in Figure 1B. Said first perforation P1 may be made such that it adapts also to the shape of the panel mounting adapter fixing sleeve, as shown in the figure, but alternatively said first perforation P1 may be adapted just to let the panel mounting adapter coupling body through the panel P, leaving the fixing sleeves outside the panel front surface PFS.

Further perforations P2 may be provided for fixing a protective plate (not shown) to the panel P according to the invention. These second perforations though are not needed if said protective plate is fixed to the panel or panel mounting adapter by any other means.

In Figure 3 a perspective view of a panel mounting adapter 2 placed in a first perforation of a panel P is shown. The panel mounting adapter 2 is fixed to the panel P e.g. by screws or snap-in, and, according to the invention, the space S between the panel mounting adapter 2 and the first perforation is filled with a sealing material, such as a silicone.

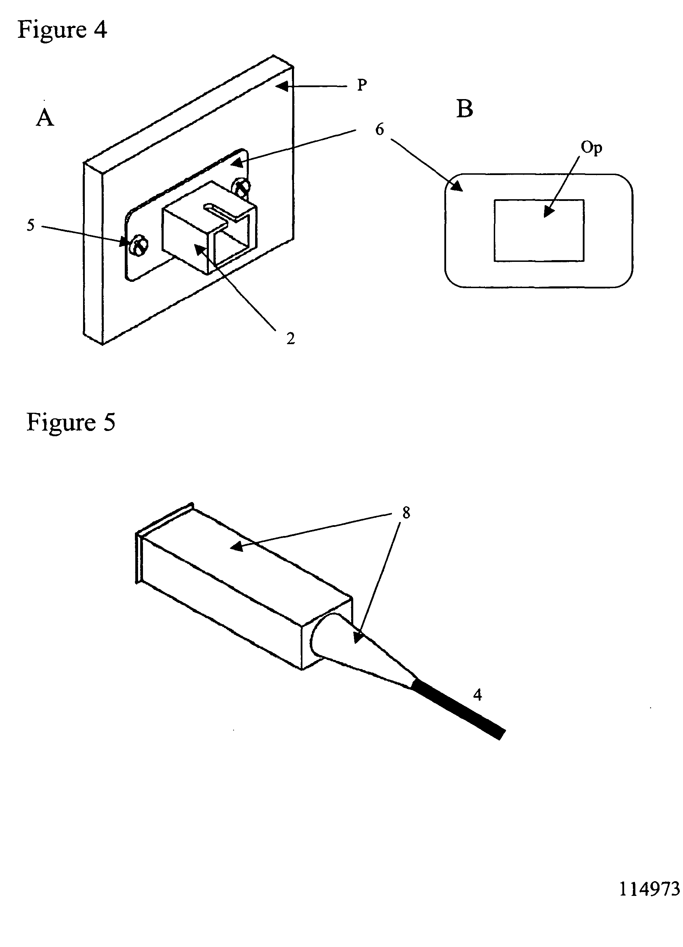

Figure 4 shows a panel P, a panel mounting adapter 2, a protective plate 6 with opening Op and screws 5.

Figure 4A shows a perspective view of the panel mounting adapter 2 fixed and sealed to the panel P according to the description of Figure 3 and a protective plate 6 fixed to the panel P by means of screws 5, but alternative known fixing means are also possible.

Figure 4B shows a front view of an exemplary embodiment of a protective plate 6 comprising an opening Op for letting through the panel mounting adapter 2. The protective plate 6 is a sheet or foil of material e.g. metal or plastic and, preferably, the opening O has a size bigger than the size of the panel mounting adapter coupling body and adapts to its form. The protective plate 6 is sealed to the panel surface by means of a sealing material such as a silicone.

Figure 5 shows a protective housing 8 and an electrical or optical transmission cable 4. The protective housing 8 shown in the figure completely covers the transmission cable plug assembly (not shown), but it is also possible that the protective housing 8 partially covers the transmission cable plug assembly, e.g. an end part of said plug assembly. The protective housing 8 may be made of a plastic or elastic material.

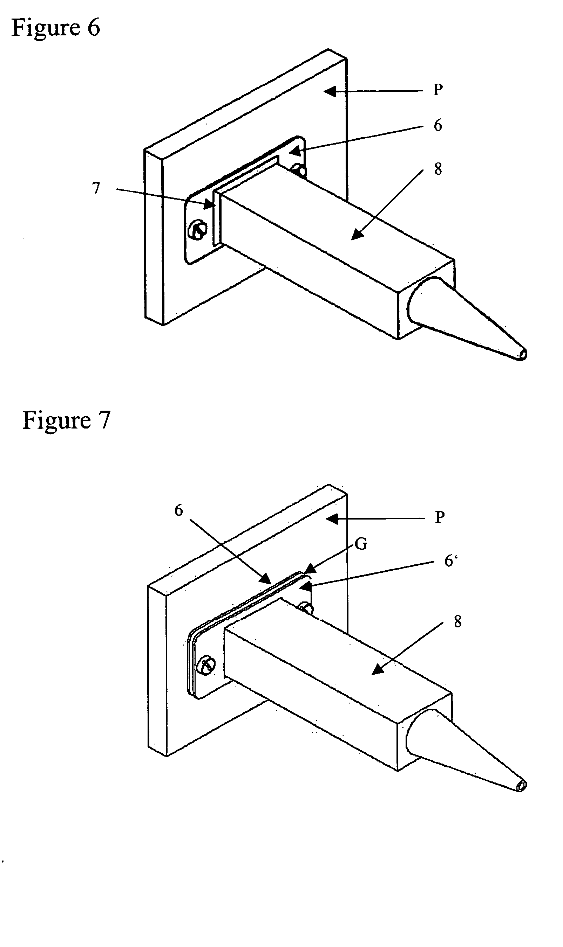

Figure 6 shows a panel P, a protective plate 6 and a protective housing 8 in an assembled state for protection of a panel connection interface according to a first embodiment of the invention. The protective plug assembly housing 8 is coupled over the panel mounting adapter (not shown) and in contact with the protective plate 6.

Since the plug assembly (not shown) inside the protective housing 8 is inserted inside the panel mounting adapter (not shown) and the form of the protective housing is substantially adapted to the outer form of the panel mounting adapter a certain coupling stability is achieved, and additionally the internal parts of the panel connection interface, that is, the panel mounting adapter and the transmission cable plug assembly, are protected from possible splashing of water or dust particles present in the connection interface application environment.

The end part of the protective housing 8, that is, the part of the protective housing in contact with the protective plate 6 may comprise projecting lips 7made for example of an elastic material to improve the sealing.

Figure 7 shows a panel P, a first protective plate 6, a second protective plate 6' and a protective housing 8 in an assembled state for protection of a panel connection interface according to a second embodiment of the invention. The protective plug assembly housing 8 is coupled over the panel mounting adapter (not shown) and in contact with the protective plate 6 as already explained in Figure 6.

The difference with the protected panel connection interface of Figure 6 is that a second protective plate 6' is added which, when fixed to the panel P, provides further fixing force to the protective housing 8, by pressing the protective housing projecting lips towards the first protective plate 6, so that coupling stability is improved, and additionally sealing of the internal parts of the panel connection interface is improved. The second protective plate 6' may have the same form as the first protective plate 6 but other forms which still achieve the object of the invention are possible.

For even more sealing robustness, the gap G between the first and the second protective plate 6, 6' may be filled with a sealing material or, alternatively the first or second protective plate 6,6' may comprise, at east at the edges, a layer of elastic or foam material which fills that gap G.

For the sake of generalization, although the examples of the invention have been directed to panel connection interface comprising a panel mounting adapter it has to be understood that said adapter might be replaced by a female electrical connector and the principles of the invention still apply. It is also understood that the panel may be an outside wall of a device housing, a wall of a building construction or a support located in such wall.

## Claims

1. Method for protecting a connection interface in a panel or wall (P), the connection interface comprising a panel mounting adapter or connector (2) and at least one plug assembly (3) adapted for coupling with said panel mounting adapter or connector (2), the panel mounting adapter or connector (2) being inserted in a perforation (P1) of the panel (P) and fixed to the panel (P), the method **characterized by** comprising the steps of:
sealing a space (S) left between the panel mounting adapter (2) and said panel (P) and/or perforation (P1) ;
providing a first protective plate (6) which completely covers said space (S);
sealing the space between said first protective plate (6) and the panel (P) surface;
providing a protective housing (8) for the plug assembly (3);
coupling the plug assembly with the protective housing (8) with the panel mounting adapter or connector (2) so that the protective housing also covers the panel mounting adapter or connector (2) and so that the protective housing (8) together with the protective plate (6) closes a space comprising the panel mounting adapter or connector (2) and the plug assembly (3).

2. The method for protecting a connection interface in a panel or wall (P) according to claim 1 comprising the step of providing a second protective plate (6') over the first protective plate (6).

3. The method for protecting a connection interface in a panel or wall (P) according to claim 2 comprising the step of sealing the gap (G) between the first and second protective plates (6, 6').

4. The method for protecting a connection interface in a panel or wall (P) according to claim 1 to 3 wherein the first perforation (P1) is made such that the panel mounting adapter or connector (2) fixing sleeves do not project outside the panel front surface (PFS).

5. Protected panel connection interface in which a panel (P) comprises a perforation (P1) adapted for the reception of a panel mounting adapter (2), which is fixed to said panel (P) such that a certain space (S) is left between the panel mounting adapter (2) and the panel (P) surface or perforation (P1), **characterized in that** said space (S) is sealed with a sealing material, a protective plate (6) covers said space (S), the space between the protective plate (6) and the panel (P) surface is sealed, and said protective plate (6) together with a protective housing (8) form a closed space covering a plug assembly (3) inserted in the panel mounting adapter (2).

6. The protected panel connection interface of claim 5 wherein the protective plate (6) is a sheet of material with an opening (Op) adapted to the form of the panel mounting adapter (2).

7. The protected panel connection interface of claim 5 or 6 wherein the part of the protective housing (8) contacting the protective plate (6) comprises projecting lips (7).

8. The protected panel connection interface of claims 5 to 7 further comprising a second protective plate (6').

9. The protected panel connection interface of claim 8 wherein the first or second protective plate (6, 6') comprises a layer of material which seals the gap (G) between the first and second protective plate (6, 6').

10. The protected panel connection interface of claim 8 wherein the gap (G) between the first and second protective plate (6, 6') is sealed with a sealing material.

## Patentansprüche

1. Verfahren zum Schützen einer Verbindungsschnittstelle in einer Tafel oder Wand (P), wobei die Verbindungsschnittstelle einen Tafel-Montageadapter oder Tafel-Montageanschluss (2) umfasst und mindestens eine Steckeranordnung (3), die zur Kopplung mit diesem Tafel-Montageadapter oder Tafel-Montageanschluss (2) angepasst ist, wobei der Tafel-Montageadapter oder Tafel-Montageanschluss (2) in eine Perforation (P1) der Tafel (P) eingesteckt und an der Tafel (P) befestigt wird, wobei das Verfahren **dadurch gekennzeichnet ist, dass** es folgende Schritte umfasst:
Versiegeln eines verbleibenden Abstands (S) zwischen dem Tafel-Montageadapter (2) und dieser Tafel (P) und/oder Perforation (P1);
Bereitstellen einer ersten Schutzplatte (6), die diesen Abstand (S) vollständig abdeckt;
Versiegeln des Abstands zwischen dieser ersten Schutzplatte (6) und der Oberfläche der Tafel (P);
Bereitstellen eines Schutzgehäuses (8) für die Steckeranordnung (3);
Koppeln der Steckeranordnung mit dem Schutzgehäuse (8) mit dem Tafel-Montageadapter bzw. Tafel-Montageanschluss (2), sodass das Schutzgehäuse auch den Tafel-Montageadapter bzw. Tafel-Montageanschluss (2) abdeckt und das Schutzgehäuse (8) zusammen mit der Schutzplatte (6) einen Abstand zwischen dem Tafel-Montageadapter bzw. Tafel-Montageanschluss (2) und der Steckeranordnung (3) schließt.

2. Verfahren zum Schützen einer Verbindungsschnittstelle in einer Tafel oder einer Wand (P) gemäß Anspruch 1, das den Schritt zum Bereitstellen einer zweiten Schutzplatte (6') über der ersten Schutzplatte (6) umfasst.

3. Verfahren zum Schützen einer Verbindungsschnittstelle in einer Tafel oder einer Wand (P) gemäß Anspruch 2, das den Schritt zum Versiegeln des Abstands (G) zwischen der ersten und der zweiten Schutzplatte (6, 6') umfasst.

4. Verfahren zum Schützen einer Verbindungsschnittstelle in einer Tafel oder Wand (P) gemäß Anspruch 1 bis 3, wobei die erste Perforation (P1) so ausgeführt ist, dass die Befestigungshülsen des Tafel-Montageadapters bzw. Anschlusses (2) nicht über die Frontfläche der Tafel (PFS) hinausragen.

5. Geschützte Tafelverbindungsschnittstelle, in der eine Tafel (P) eine Perforation (P1) umfasst, die angepasst ist zur Aufnahme eines Tafel-Montageadapters (2), der so an dieser Tafel (P) befestigt ist, dass ein gewisser Abstand (S) zwischen dem Tafel-Montageadapter (2) und der Oberfläche oder Perforation (P1) der Tafel (P) verbleibt, **dadurch gekennzeichnet, dass** dieser Abstand (S) mit einem Versiegelungsmaterial versiegelt wird, dass eine Schutzplatte (6) diesen Abstand (S) abdeckt, dass der Abstand zwischen der Schutzplatte (6) und der Oberfläche der Tafel (P) versiegelt ist und dass diese Schutzplatte (6) zusammen mit einem Schutzgehäuse (8) einen geschlossenen Bereich bilden, der eine Steckeranordnung (3) abdeckt, die in den Tafel-Montageadapter (2) eingeschoben wird.

6. Geschützte Tafelverbindungsschnittstelle gemäß Anspruch 5, wobei die Schutzplatte (6) eine Materialplatte mit einer Öffnung (Op) darstellt, die an die Form des Tafel-Montageadapters (2) angepasst ist.

7. Geschützte Tafelverbindungsschnittstelle gemäß Anspruch 5 oder 6, wobei der Teil des Schutzgehäuses (8), der Kontakt mit der Schutzplatte (6) hat, hervorstehende Lippen (7) umfasst.

8. Geschützte Tafelverbindungsschnittstelle gemäß Anspruch 5 bis 7, die des Weiteren eine zweite Schutzplatte (6') umfasst.

9. Geschützte Tafelverbindungsschnittstelle gemäß Anspruch 8, wobei die erste oder zweite Schutzplatte (6, 6') eine Materialschicht umfasst, die die Lücke (G) zwischen der ersten und zweiten Schutzplatte (6,6') versiegelt.

10. Geschützte Tafelverbindungsschnittstelle gemäß Anspruch 8, wobei die Lücke (G) zwischen der ersten und zweiten Schutzplatte (6,6') mit einem Versiegelungsmaterial versiegelt ist.

## Revendications

1. Procédé de protection d'une interface de connexion dans un panneau ou une paroi (P), l'interface de connexion comprenant un adaptateur ou connecteur de montage de panneau (2) et au moins un montage de connecteur (3) adapté pour se coupler audit adaptateur ou connecteur de montage de panneau (2), l'adaptateur ou connecteur de montage de panneau (2) étant inséré dans une perforation (P1) du panneau (P) et fixé au panneau (P), le procédé étant **caractérisé en ce qu'**il comprend les étapes suivantes :
scellement d'un espace (S) laissé entre l'adaptateur de montage de panneau (2) et ledit panneau (P) et/ou la perforation (P1);
fourniture d'une première plaque protectrice (6) qui recouvre complètement ledit espace (S) ;
scellement de l'espace entre ladite première plaque protectrice (6) et la surface du panneau (P) ;
fourniture d'un logement de protection (8) pour le montage de connecteur (3) ;
couplage du montage de connecteur avec le logement de protection (8) à l'adaptateur ou connecteur de montage de panneau (2) de façon que le logement de protection recouvre aussi l'adaptateur ou connecteur de montage de panneau (2) et de façon que le logement de protection (8) conjointement à la plaque de protection (6) ferme un espace comprenant l'adaptateur ou connecteur de montage de panneau (2) et le montage de connecteur (3).

2. Procédé de protection d'une interface de connexion dans un panneau ou une paroi (P) selon la revendication 1, comprenant l'étape consistant à prévoir une seconde plaque protectrice (6') sur la première plaque protectrice (6).

3. Procédé de protection d'une interface de connexion dans un panneau ou une paroi (P) selon la revendication 2, comprenant l'étape consistant à sceller l'intervalle (G) entre les première et seconde plaques protectrices (6, 6').

4. Procédé de protection d'une interface de connexion dans un panneau ou une paroi (P) selon les revendications 1 à 3, dans lequel la première perforation (P1) est faite de telle sorte que les manchons de fixation de l'adaptateur ou connecteur de montage de panneau (2) ne fassent pas saillie à l'extérieur de la surface avant du panneau (PFS).

5. Interface de connexion de panneau protégée, dans laquelle un panneau (P) comprend une perforation (P1) adaptée pour recevoir un adaptateur de montage de panneau (2), qui est fixé audit panneau (P) de façon qu'un certain espace (S) soit laissé entre l'adaptateur de montage de panneau et la surface du panneau (P) ou la perforation (P1), **caractérisée en ce que** ledit espace (S) est scellé au moyen d'un matériau d'étanchéité, une plaque protectrice (6) recouvre ledit espace (S), l'espace entre la plaque protectrice (6) et la surface du panneau (P) est scellé et ladite plaque protectrice (6), conjointement à un logement de protection (8), forme un espace fermé qui recouvre un montage de connecteur (3) inséré dans l'adaptateur de montage de panneau (2).

6. Interface de connexion de panneau protégée selon la revendication 5, dans laquelle la plaque protectrice (6) est une feuille d'un matériau comportant une ouverture (Op) adaptée à la forme de l'adaptateur de montage de panneau (2).

7. Interface de connexion de panneau protégée selon la revendication 5 ou 6, dans laquelle la partie du logement de protection (8) en contact avec la plaque protectrice (6) comprend des lèvres en saillie (7).

8. Interface de connexion de panneau protégée selon les revendications 5 à 7, comprenant en outre une seconde plaque protectrice (6').

9. Interface de connexion de panneau protégée selon la revendication 8, dans laquelle la première ou la seconde plaque protectrice (6, 6') comprend une couche de matériau qui scelle l'intervalle (G) entre les première et seconde plaques protectrices (6, 6').

10. Interface de connexion de panneau protégée selon la revendication 8, dans laquelle l'intervalle (G) entre les première et seconde plaques protectrices (6, 6') est scellé au moyen d'un matériau d'étanchéité.
